(19)

**Europäisches Patentamt**
**European Patent Office**
**Office européen des brevets**

(11) **EP 4 722 529 A1**

(12) **EUROPEAN PATENT APPLICATION**

(43) Date of publication:
08.04.2026 Bulletin 2026/15

(21) Application number: 24204791.8

(22) Date of filing: 04.10.2024

(51) International Patent Classification (IPC):
*F03D 7/02* (2006.01)

(52) Cooperative Patent Classification (CPC):
**F03D 7/0284;** F05B 2270/1033; F05B 2270/10711;
F05B 2270/337

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Nordex Energy SE & Co. KG**
**22419 Hamburg (DE)**

(72) Inventors:
• **LAUBROCK, Malte**
**22419 Hamburg (DE)**
• **RUBEN, Mathias**
**22419 Hamburg (DE)**
• **WESSELS, Christian**
**22419 Hamburg (DE)**

(74) Representative: **Elion IP, S.L.**
**Paseo Castellana, 150-4 dcha**
**28046 Madrid (ES)**

(54) **WIND TURBINE GENERATORS WITH FAULT RIDE THROUGH**

(57) A method comprising: monitoring active power provided by at least one wind turbine generator, WTG, prior to a fault event that causes at least one fault affecting the at least one WTG in a predetermined time duration, each fault of the at least one fault causing a voltage reduction; determining a voltage reduction parameter indicative of the voltage reduction of at least one fault in the fault event when the fault event occurs; and determining an active power ramp up control strategy for the at least one WTG at least based on the active power and the voltage reduction parameter. Also, a computing device or system, a wind turbine generator or a wind farm, and a computer program.

**FIG. 1**

## Description

### TECHNICAL FIELD

The present disclosure relates to the field of renewable energies. More particularly, the present disclosure relates to wind turbine generators, WTGs, capable of performing fault ride through, FRT, and FRT methods.

### BACKGROUND

Voltage reductions in wind turbine generators can pose a significant challenge to grid stability. When the voltage drops below a certain threshold, the power output may decrease significantly and become unstable. This can lead to cascading failures, as other WTGs may also experience voltage drops and shut down. And one of the major concerns associated with voltage reductions in WTGs is the potential for grid instability. When multiple WTGs disconnect from the electric grid due to voltage dips, it can lead to a sudden decrease in power supply, which can cause frequency deviations and voltage fluctuations. This can further destabilize the electric grid and lead to cascading failures.

Another significant problem is that voltage reductions and subsequent recovery from such reductions by WTGs may cause damage to wind turbine components. Frequent voltage dips can stress the electrical insulation of a generator and electrically and/or mechanically damage other components, leading to premature failure.

The above problems may be exacerbated when multiple voltage faults occur frequently, especially when consecutive voltage faults occur within a short time span, for example, in ten seconds or less.

To mitigate these risks, WTGs should be equipped with FRT capability. FRT enables the generator to remain connected to the grid and continue operating during voltage dips or transient faults. This helps to maintain grid stability and prevent cascading failures. FRT capability is crucial in preventing these scenarios by ensuring that WTGs remain connected and continue to provide power during voltage disturbances. Also, FRT capability can help to reduce the stress on the components, thereby extending the lifespan of the WTG and reducing maintenance costs.

Existing FRT mechanisms in WTGs do not provide a sufficiently good response to many voltage faults of different characteristics. Accordingly, there is interest in improving FRT mechanisms. There is also interest in providing FRT mechanisms capable of coping with multiple voltage faults in a row, thereby providing multiple fault ride through, MFRT, mechanisms.

### DESCRIPTION

A first aspect relates to a method. The method may comprise monitoring active power provided by at least one wind turbine generator, WTG, prior to a fault event that causes at least one fault affecting the at least one WTG in a predetermined time duration, each fault of the at least one fault causing a voltage reduction. The method may also comprise determining a voltage reduction parameter indicative of the voltage reduction of at least one fault (e.g., a first fault, a fault subsequent to the first fault, if any, etc.) in the fault event when the fault event occurs. The method may also comprise determining an active power ramp up control strategy for the at least one WTG at least based on the active power (i.e., the monitored active power) and the voltage reduction parameter.

When the fault event occurs, a voltage reduction or drop from an electric grid that the at least one WTG is connected to may be detected. The severity of the fault, or faults when multiple exist during a same fault event, may be characterized by measuring how much reduction in voltage or active power there has been, namely, the difference between the voltage, active power and/or electrical torque when the fault is underway or when the fault has just been cleared and the voltage, active power and/or electrical torque before the fault event occurred. The fault or faults may additionally or alternatively be characterized by measuring how long the fault or faults last, namely, what is the time duration of the fault(s), and/or how many faults there have been during the fault event (i.e., during the predetermined time duration of the fault event). All such magnitudes may be measured before, during and after the fault event for characterization of the fault event and, particularly, for characterization of the severity of the fault(s) therein. Accordingly, in some embodiments, the voltage reduction parameter comprises an active power difference between the monitored active power prior to the fault event and the active power provided by the at least one WTG during the fault event, and/or an amount of active power that may be supplied to an electric grid during the fault event (e.g., the amount of power that the electric grid allows, the amount of power that the at least one WTG is capable of providing, etc.), and/or an amount of retained voltage on the at least one WTG, and/or an electrical torque difference between an electrical torque of the at least one WTG prior to the fault event and the electrical torque of the at least one WTG during the fault even.

The active power ramp up control strategy is intended to recover correct operation of the at least one WTG from the fault event. The ramp up control strategy at least defines how much the at least one WTG has to increase the active power to be provided in a period of time. For that, it is considered how much active power was being provided prior to the fault event and how severe the fault(s) are to establish the ramp up control strategy, which may then be applied to the at least one WTG to go back to normal operation. Accordingly, the at least one WTG has FRT capability when there is one fault in the fault event, and MFRT capability when there is more than one fault in the fault event.

The ramp up control strategy has a predetermined minimum active power target, which is configurable, to be provided by the at least one WTG for reaching normal operation. The predetermined minimum active power target is, e.g., 85% or more of the active power provided just before the fault event (i.e., the monitored active power), 90% or more of the monitored active power, and/or 95% or more of the monitored active power.

The time that the ramp up control strategy allocates to increase the active power to be provided and at least reach the predetermined minimum active power target is at least made dependent upon the voltage reduction parameter and the predetermined minimum active power target.

The ramp up control strategy may be further based on a grid code associated with an electric grid that the at least one WTG is connected to. In such cases, the ramp up control strategy has maximum and/or minimum parameters for fulfillment by the at least one WTG defined by the grid code. Therefore, the ramp up control strategy has one or more limit values that in case of being exceeded, superiorly or inferiorly, when determining the control strategy, said limit values supersede the respective values initially determined for the control strategy. By way of example, the grid code may establish how fast or slow the ramp up may be, so any faster or slower determined ramping up would default to the grid code value.

In some embodiments, the method further comprises determining a multiple fault parameter indicative of existence of multiple faults in the fault event. Also, the determination of the active power ramp up control strategy is further based on the multiple fault parameter.

The at least one WTG is capable of withstanding multiple faults owing to the MFRT capability. Multiple faults are detected when a subsequent fault occurs after clearance of a fault, and the time elapsed between the two faults is less than a predetermined fault delay such that the two faults occur within the predetermined time duration of the fault event.

The ramp up control strategy is made dependent upon the multiple fault parameter such that: the ramping up is started with more delay and, thus, wait a certain amount of time to allow further faults (if any) to occur; and/or the ramping up takes more time, i.e., it is made slower; and/or the predetermined minimum active power target is made smaller.

Even though in situations in which the at least one WTG may have started the ramping up of active power to be provided and a new fault takes place, there could be a worsening of the state of the WTG(s) as electrical torque thereof may increase beyond acceptable values for correction operation of the WTG(s). However, the multiple fault parameter allows to adapt the ramp up control strategy to the existence of the additional fault (or faults) and reduce an impact of the ramping up on the state of the at least one WTG should further faults happen.

The multiple fault parameter may comprise, for example, one or more of: a number of faults during the predetermined time duration of the fault event, a time elapsed between at least one pair of faults during the predetermined time duration of the fault event, and the voltage reduction parameter for a plurality of faults during the predetermined time duration of the fault event.

In some cases, the predetermined fault delay is less than the predetermined time duration.

In some embodiments, in the determination of the active power ramp up control strategy, the active power ramp up control strategy is made slower when the multiple fault parameter is indicative of existence of multiple faults, and/or when the multiple fault parameter is indicative of an increase in a number of faults.

The ramp up control strategy may be made longer in presence of multiple faults, but it can also be made slower depending on the total number of multiple faults. As faults sometimes cascade, the likelihood of occurring a subsequent fault tends not to be negligible, thus by making the ramp up control strategy longer, i.e., slower, the at least one WTG may be less exposed to the damage a subsequent fault may cause during ramping up.

In some embodiments, the method further comprises making the predetermined time duration longer when a second fault and/or at least one subsequent fault occurs in the fault event. The second fault and/or the at least one subsequent fault is/are posterior to the first fault.

As faults may cascade during the fault event, the initial predetermined time duration (e.g., 10 seconds or more, 1 minute or more, 5 minutes or more, 10 minutes or more, 30 minutes or more, etc.) may not be sufficient to detect multiple faults with the same original cause. However, making the ramp up control strategy to be adaptable to longer fault events may improve the control strategy for recovering from multiple faults. To this end, the predetermined time duration is made longer with multiple faults to allow detection of subsequent faults (if any) as part of the same fault event.

The lengthening of the predetermined time duration may be made according to any lengthening strategy. By way of example, when there is a subsequent fault, the predetermined time duration may be made one time longer; namely, with three faults in a same fault event, the predetermined time duration may be made three times the original predetermined time duration. By way of another example, when there is a subsequent fault, time is added to the predetermined time duration such that, from the occurrence of that subsequent fault, the fault event at least lasts the predetermined time duration again.

The lengthening may be conducted in particular cases if so configured, for example, when more than half of the predetermined time duration has already elapsed and a subsequent fault occurs, or when there are two or more faults occurring within the first half of the predetermined time duration, etc.

In some embodiments, the method further comprises monitoring at least one parameter representative of a state of at least one component of the at least one WTG; and the determination of the active power ramp up control strategy is further based on the monitored at least one parameter.

The at least one parameter may be representative of, for example but without limitation, one or more of: stress or load of at least one blade of the at least one WTG, stress or load of at least one tower of the at least one WTG, swinging of at least one drivetrain of the at least one WTG, a combination thereof, etc.

Based on the value of the at least one parameter, the active power ramp up may be made faster or slower to better adapt to the current state of the at least one WTG and, therefore, lower the impact of the FRT on the component(s) of the WTG(s) in terms of mechanical or electrical damage that the ramp up may cause to the WTG(s).

In some embodiments, the at least one parameter representative of the state of the at least one component is at least one drivetrain swing phase of the at least one WTG. And the determination of the active power ramp up control strategy is further based on the monitored drivetrain swing phase.

Swinging of the drivetrain may put additional mechanical and/or electrical stress on the drivetrain when the ramping up causes excessive swinging. By taking into account the swinging of the drivetrain prior to the ramping up, the ramp up control strategy may reduce the increase in swinging that the ramping up will produce, and thus reduce oscillation and instability, thereby increasing the life and working performance of the drivetrain.

The swinging tends to reduce following a voltage reduction. Depending on when the ramping up is going to be effected and how much swinging there is on the drive train at that time, the ramp up control strategy may be determined to be faster or slower. To this end, during determination of the active power ramp up control strategy, the method may comprise calculating how much swinging the drivetrain will have upon running a determined active power ramp up control strategy, and modifying the active power ramp up control strategy for it to be faster or slower depending on the calculated swinging.

In some embodiments, in the determination of the active power ramp up control strategy, the active power ramp up control strategy has a time duration that is proportional to measured swinging in the monitored drivetrain swing phase.

If the swinging is reduced, the ramp up control strategy may be determined to be faster to perform FRT or MFRT as quickly as possible, in which case more active power will be provided sooner. And the other way around, in order to protect the drivetrain from excessive swinging, greater levels of swinging on the drivetrain will cause determining a slower active power ramp up control strategy.

In some embodiments, the method further comprises running a fault ride through control strategy during the occurrence of the fault event by increasing an active current on the at least one WTG to minimize reduction in active power provided by the at least one WTG when the monitored active power corresponds to a rated active power below a nominal active power.

When the active power prior to the fault event is a level below the nominal active power, the reduction in voltage may sometimes be compensated for by increasing the active current so that the resulting active power remains the same or substantially similar to the provided prior to the fault event.

In some cases, the increase in active current of such FRT control strategy cannot sufficiently compensate for the voltage reduction, and therefore the active power provided is less than that previously provided, still the reduction in provided active power is not as significant as if no FRT control strategy were to be provided.

By way of example, if prior to a fault event the active power provided by an WTG is 0.5 p.u. (per unit), the voltage may be of, e.g., 0.95 p.u., and the active current may be of, e.g., 0.52 p.u. Following a fault event, the voltage drops to, e.g., 0.45 p.u., and so it may be determined that the FRT control strategy comprises increasing the active current to, e.g., 1.11 p.u., or as close to that value as possible. If such active current is provided, the active power provided will still be 0.5 p.u., whereas a value of active of, e.g., 1.03 p.u., would result in an active power of, e.g., 0.46 p.u.

It is noted that there is a limited amount of active current that may be supplied, which depends on the characteristics of the electrical equipment associated with the at least one WTG, thus the FRT control strategy depends on said electrical equipment.

In some embodiments, the determination of the active power ramp up control strategy is further based on the fault ride through control strategy.

When there is an FRT control strategy to limit the reduction in provision of active power during a fault event, the active power ramp up control strategy is to define a ramp up that starts from the same voltage reduction caused by the fault event but with a greater active power (due to an increased active current). The ramp up control strategy may thus be determined to reach the predetermined minimum active power target in less time. In such case, the ramp up control strategy involves reducing the active current as the voltage increases following the end of the fault.

In some embodiments, the method further comprises running the active power ramp up control strategy on the at least one WTG after a predetermined time has elapsed since the fault event started.

In some embodiments, the predetermined time is equal to or greater than the predetermined time duration.

The ramp up control strategy may be run after a given fault has been cleared, either immediately after or after some time has elapsed. Alternatively, the ramp up control strategy may be run after the fault event has finished according to the predetermined time duration, either immediately after or after some time has elapsed.

In some embodiments, the active power ramp up control strategy comprises a ramp up gradient and/or rate defining how the at least one WTG is to provide active power during ramping up.

The gradient may be a linear gradient, e.g., a scaled ramp function, or a curve gradient, e.g., a polynomial function, a power function, etc. The rate may be a time duration, a speed of increase, etc.

In some embodiments, determining the active power ramp up strategy comprises determining an active power ramp up rate from a predetermined range of active power rates or selecting the active power ramp up rate from a plurality of predetermined active power ramp up rates.

A range of active power rates with a minimum rate and a maximum rate may provide an allowable range of rates for the ramping up. Based on the characteristics of the fault event (e.g., the voltage reduction parameter, available active power during faults, active power provided before the fault event, the multiple fault parameter, grid code, etc.), a rate value from the range may be determined for the ramp up control strategy.

A set of different predetermined ramp up rates may be configured for different situations, and based on characteristics of the fault event, select one rate or another.

In some embodiments, the method further comprises configuring the predetermined time duration. For example, the predetermined time duration may be set based on existing grid codes, likelihood of multiple faults occurring in a row (e.g., having regard historical values of problems in the electric grid), etc.

In some embodiments, the method is a computer-implemented method.

The computer-implemented method runs in one or more processing devices, in an independent manner and/or in a distributed manner. That is to say, one, some or all steps may be run by a same processing device, or one or some steps may be run by one processing device and some other step or steps may be run by one or more other processing devices or even be run in a distributed manner, which means that several processing devices cooperate to run one or more steps. In this sense, the steps are digitally run. The processing device or devices may be included in at least one controller of at least one WTG or at least one controller of a wind farm that has a plurality of WTGs, for example, a processing device such as, but without limitation, a server, a field-programmable gate array, an application specific integrated circuit, etc.

A second aspect relates to a computing device or system comprising means adapted to execute some or all steps of a method as described in the first aspect.

The computing device or system can control the operation of one or more WTGs to provide the WTG(s) with FRT and, optionally, MFRT capability. To this end, in some embodiments, the computing device or system is part of a controller of one or more WTGs or a wind farm. The computing device or system may be arranged in a WTG, in a control center of the wind farm, or be remote therefrom.

The means may include at least one processing device and at least one memory that, for example, stores instructions for execution by the at least one processing device.

A third aspect relates to a WTG comprising at least one computing device or system as described in the second aspect configured to control operation of the wind WTG.

A fourth aspect relates to a wind farm comprising a plurality of WTGs and at least one computing device or system as described in the second aspect configured to control operation of one or more WTGs of the plurality of WTGs.

A fifth aspect relates to a computer program including instructions which, when the program is executed by at least one computing device or system, cause the at least one computing device or system to carry out some or all steps of a method as described in the first aspect.

A sixth aspect relates to a computer-readable non-transitory storage medium. The storage medium may comprise instructions which, when executed by at least one computing device or system, cause the at least one computing device or system to carry out some or all steps of a method as described in the first aspect.

A seventh aspect relates to a data carrier signal carrying a computer program as described in the fifth aspect.

**BRIEF DESCRIPTION OF THE DRAWINGS**

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:

Figure 1 shows an example of voltage of an electric grid and active power provided by at least one WTG when there is a fault event.

Figure 2 shows an example of electrical torque of at least one WTG when there is a fault event and the at least one WTG is to recover from the fault event.

Figure 3 shows two examples of electrical torque of at least one WTG depending on the active power ramp up control strategy run.

Figure 4 shows a diagram of a computing device or system in accordance with some embodiments.

Figure 5 shows a diagram of a method in accordance with some embodiments.

Figure 6 shows two examples of active power ramp up control strategies, following a fault event, in accordance with some embodiments.

Figure 7 shows different examples of active power ramp up control strategies, following a fault event, in accordance with some embodiments.

Figure 8 shows an example of an active power ramp up control strategy, following a fault event, in accordance with some embodiments.

Figure 9 shows an example of an FRT control strategy and an active power ramp up control strategy, following a fault event, in accordance with some embodiments.

Figure 10 shows an example of an active power ramp up control strategy, in presence of multiple faults of a fault event, in accordance with some embodiments.

**DETAILED DESCRIPTION**

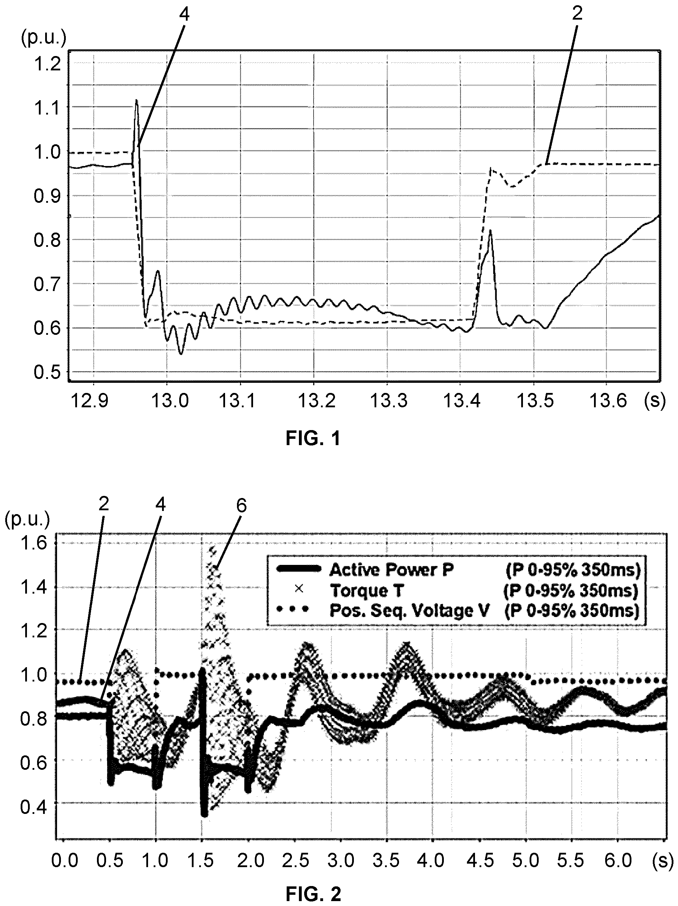

Figure 1 shows an example of voltage 2 of an electric grid and active power 4 provided by at least one WTG when there is a fault event. For the sake of clarity only, the voltage 2 and the active power 4 are both represented in p.u. with reference to nominal voltage and active power.

At time instant corresponding to 12.95 seconds, there is a fault in a fault event that produces a voltage reduction. The voltage 2 gets reduced to about 0.6 p.u., and the fault lasts about 450 milliseconds, during which the active power 4 also falls to about 0.6 p.u. after having made an increase for a short time period when the fault starts. Such active power 4 increase may be caused by the supply of additional active current for a certain time as the voltage 2 drops, for example as an FRT control strategy.

When the fault ends, at about 13.4 seconds, the voltage 2 progressively recovers and reaches a value similar to the voltage 2 prior to the fault. The active power 4 provided by the at least one WTG also increases for a short time period when the voltage 2 starts to increase, but falls to the active power 4 provided during the fault before starting to increase owing to an active power ramp up control strategy that brings the power 4 from 0.6 p.u. to a predetermined minimum active power target not seen, which is at least 85% of the original active power 4 (about 0.92 p.u.), i.e., the target is at least 0.78 p.u. The ramp up control strategy is run after the fault has cleared, thus after 13.5 seconds.

Figure 2 shows an example of electrical torque 6 of at least one WTG when there is a fault event and the at least one WTG is to recover from the fault event. Represented in the graph are voltage 2 of the electric grid and active power 4 provided by the at least one WTG. For the sake of clarity only, p.u. is used for representing the different curves and markers.

At 0.5 s there is a first fault of a fault event that reduces the voltage 2 to about half of the original value, thereby causing a similar reduction of the active power 4, which was originally at 0.8 p.u. and lowers to about 0.45 p.u. As it can be seen, the torque 6 increases significantly from about 0.85 p.u. up to 1.1 p.u., and then slowly reduces to between 0.6 and 0.8 p.u.

At 1.0 s, the first fault ends and the voltage 2 starts to increase. The active power 4 starts to increase after the voltage 2 increases to reach a power 4 of about 0.75 p.u.

At 1.5 s there is a second fault of the same fault event that causes the voltage 2 and active power 4 to reduce once again. The torque 6 increases again, however, it does so significantly more than the first time and reaches values of about 1.6 p.u., which can damage components in the at least one WTG, especially, but not only, the drivetrain.

The second fault lasts about half a second, and then the voltage 2 starts to increase again at 2.0 s. The active power 4 starts to increase afterwards, and so does the torque 6, which even though eventually gets back to the original value of 0.85 p.u., it takes a long time to get steady as it keeps oscillating between 0.75 p.u. and 1.1 p.u., also causing the active power 4 to oscillate until it gets steady.

In this embodiment, the active power ramp up control strategy is set up to recover the active power 4 to a 95% of the original power value in 350 milliseconds. In some other embodiments, when there are multiple faults like in the case illustrated in Figure 2, the active power ramp up control strategy changes at least one of the parameters defining the control strategy as there are multiple faults.

As it can be observed, the electrical torque may also be used as an indicator, in the form of a parameter, of the occurrence of faults.

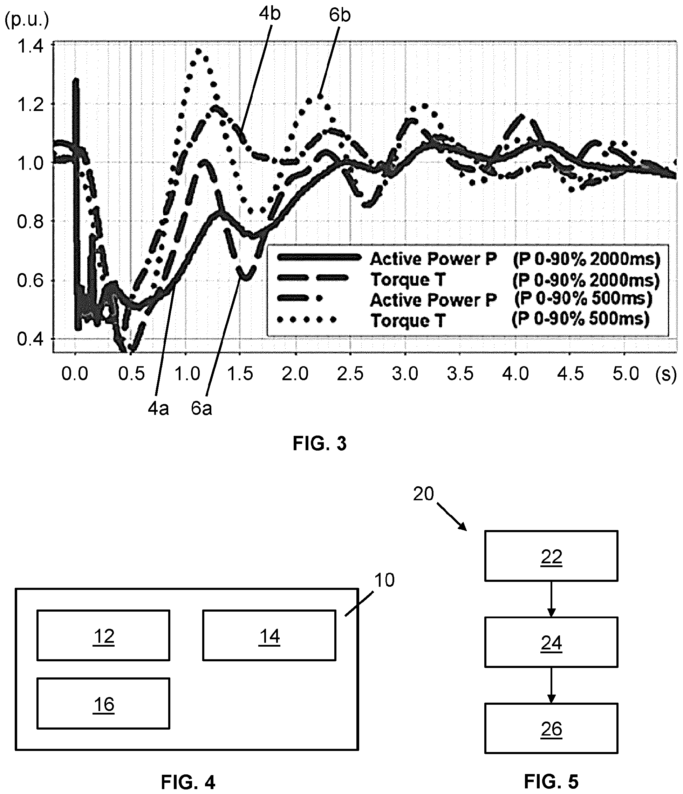

Figure 3 shows two examples of electrical torque 6a, 6b of at least one WTG depending on the active power ramp up control strategy run. A first electrical torque 6a is associated with a first active power 4a provided by the at least one WTG, which has a ramp up control strategy of 90% of the original active power in 2 seconds. A second electrical torque 6b is associated with a second active power 4b provided by the at least one WTG, which has a ramp up control strategy of 90% of the original active power in 0.5 seconds. Again, p.u. is used for the sake of clarity only with reference to nominal active power and torque.

As it can be seen, upon occurrence of a fault at time 0.0 seconds, the at least one WTG with the slower ramp up control strategy takes more time to reach the predetermined minimum active power target (90%), yet the torque 6a is maintained within a narrower range with values ranging between 0.85 and 1.15 p.u. The active power 4a can thus be provided more steadily around the target value.

Turning to the case of the at least one WTG with the faster ramp up control strategy, the active power 4b is provided at the predetermined minimum active power target (90%) more quickly, but in this case the torque 6b oscillates more than that of the other at least one WTG and it ranges between 0.8 and 1.35 p.u. Although the active power 4b converges quickly, the power provided during some intervals exceeds the original active power 4b, which depending on the values and the time it takes after the fault, may not comply with the grid code associated with the electric grid. By the same token, a too slow recovery of active power provision may also not comply with the grid code associated with the electric grid.

Figure 4 shows a diagram of a computing device or system 10 in accordance with some embodiments.

The computing device or system 10 includes one or more processors 12. The computing device or system 10 also includes at least one memory module 14 for storage of data such as a monitored active power, a voltage reduction parameter, characteristics about a fault event and/or severity of faults thereof, configuration parameters of active power ramp up control strategies, etc. Additionally, the at least one memory module 14 may store a computer program in the form of instructions that, upon running, perform a method according to the present disclosure.

The computing device or system 10 may also include, in some embodiments, a communications module 16 configured to transmit data to and/or receive data from, in wired and/or wireless form, controllers and/or sensors of at least one WTG, data about an electric grid, etc. For example, the computing device or system 10 may transmit operating instructions to, e.g., a controller for configuring the operation of at least one WTG.

Figure 5 shows a diagram of a method 20 in accordance with some embodiments.

The method 20 includes a step whereby at least one controller or computer device or system monitors 22 active power provided by at least one wind turbine generator. The active power may be monitored at least preceding a fault event from an electric grid that causes voltage reduction in the electric supply to the at least one wind turbine generator. In some cases, the active power is also monitored 22 during and/or after the fault event.

The method 20 also includes a step whereby the at least one controller or computer device or system determines 24 a voltage reduction parameter indicative of the voltage reduction of at least a first fault in the fault event when the fault event occurs.

The method 20 also includes a step whereby the at least one controller or computer device or system determines 26 an active power ramp up control strategy for the at least one WTG. For the determination 26, the monitored active power and the determined voltage reduction parameter are considered.

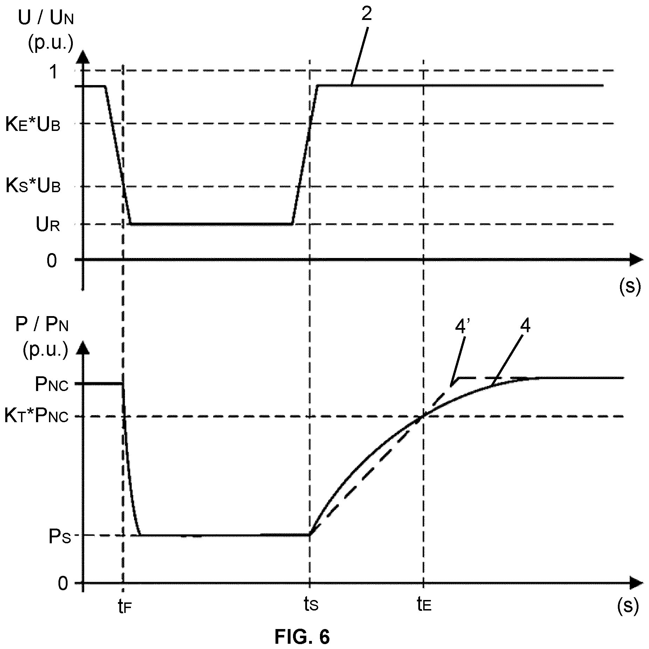

Figure 6 shows two examples of active power ramp up control strategies, following a fault event, in accordance with some embodiments. The top graph corresponds to voltage 2 values at a WTG, and the bottom graphs corresponds to active power 4, 4' values of a WTG, each represented in p.u. in respect of a nominal voltage, $U_N$, and a nominal active power, $P_N$.

A fault of a fault event takes place at time instant $t_F$, at which time the voltage 2 lowers beyond a first reference level and goes down to, e.g., a residual voltage $U_R$. By way of example, the first reference level to determine that there is a fault may be based on a configurable parameter Ks, e.g., a constant, times a reference voltage $U_B$, or the voltage 2 a certain time before (e.g., 20 milliseconds). This way, oscillations of the voltage 2 may not be considered a fault.

When the voltage 2 increases and reaches a second reference level, it is considered that the fault has been cleared. By way of example, the second reference level to determine that there is a fault may be based on a configurable parameter $K_E$, e.g., a constant, times the reference voltage $U_B$, or the voltage 2 a certain time before (e.g., 20 milliseconds) the fault started. At that time, i.e., time instant $t_S$, an active power ramp up control strategy may be run to increase the active power 4 from a power level Ps due to the fault up to an active power target that is preferably a scaled value of a pre-fault active power $P_{NC}$. The pre-fault active power may be scaled by a configurable parameter $K_T$ such as, e.g., a constant.

The active power 4 of the WTG is to be increased for the duration of the ramp up control strategy between instants $t_S$ and $t_E$, which are determined as part of the control strategy. The way the active power 4 is increased, for example, by way of a curve 4 or a linear function 4' may also be determined as part of the control strategy depending on one or more parameters. After the ramp up control strategy ends at instant $t_E$, the WTG can function normally and increase the active power 4 to the pre-fault active power $P_{NC}$, for example, at a rate defined by the grid code or configured in any way known in the art.

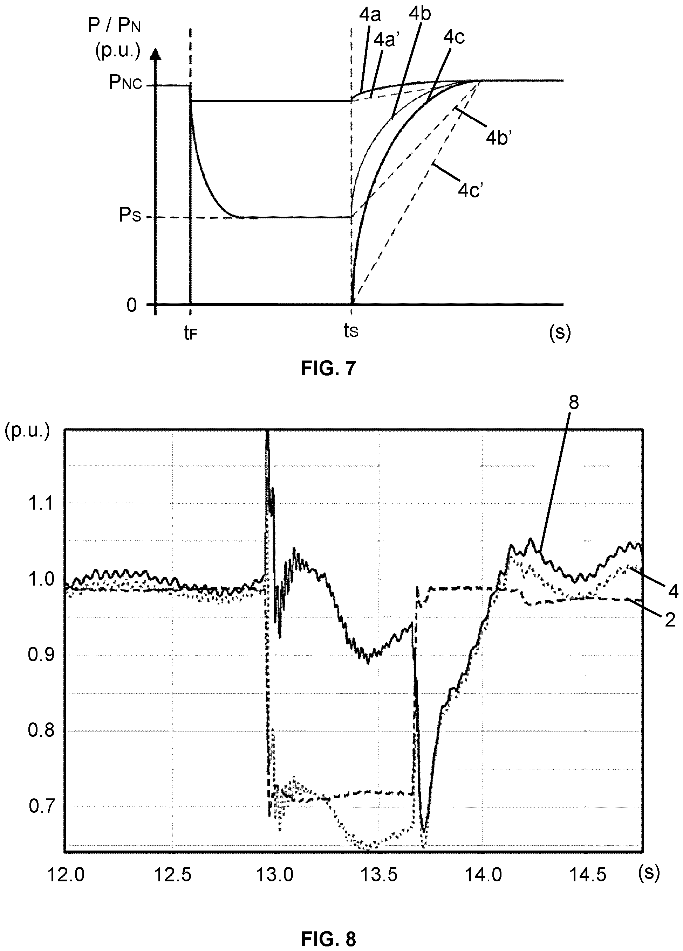

Figure 7 shows different examples of active power ramp up control strategies, following a fault event, in accordance with some embodiments.

The graph represents different scenarios in which the active power provided by a WTG drops due to a fault event. In a first case, the active power 4a reduces slightly with respect to pre-fault active power $P_{NC}$, which may occur when the fault is considered to be weak; in a second case, the active power 4b reduces more with respect to $P_{NC}$ reaching a minimum power value Ps; and. in a third case, the fault is such that the active power 4b reduces to zero. The fault of the third case and, possibly, the fault of the second case are regarded as a severe fault when the retained voltage is below a predetermined threshold representative of a too large voltage reduction.

At a certain time instant $t_S$, a ramp up control strategy is run. In the first case, which has the active power 4a close to the original pre-fault active power PNC, which could be due to the running of an FRT control strategy, for example, the needed power increase is reduced, and it can be configured to follow a curve 4a or a linear function 4a'. In the second case, curve or linear functions 4b, 4b' may also be configured for recovering normal operation from the fault, yet with a greater power increase. Likewise, in the third case, curve or linear functions 4c, 4c' may also be configured for recovering normal operation from the fault, with a significant power increase starting from active power equal zero or close to zero p.u.

For each ramp up control strategy, the duration thereof may be different depending on one or more parameters, one being, for example, the amount of power that needs to be recovered. Other possible parameters are, for example, how much swinging there is in the drivetrain, or how much stress there is on one or more blades of the WTG, etc. Selection of a curve or linear function may also be dependent upon the existing grid code and the limits imposed by the grid code to the rate at which the active power may be ramped up.

By way of example, the determination of an active power ramp up control strategy may be as follows. A gradient, g, of the power ramp up is calculated such that:

$$g = P_T \frac{1 - P_{DF}/P_T}{t_T}$$

where $P_T$ is a predetermined minimum active power target, for example, $P_{NC}$ or $P_{NC}$ times a constant (e.g., 0.85, 0.90, etc.); $P_{DF}$ is the active power provided during the fault, for example, Ps or zero; and $t_T$ is a time parameter representative of a time to reach $P_T$, which may vary depending on characteristics of the fault event. For example, the time parameter $t_T$ may be multiplied by a constant that is less than the unit when the fault is considered to be weak, or by a constant that is greater than the unit when a multiple fault parameter has been determined and there are multiple faults in a fault event.

A time t to reach $P_T$ may be calculated as:

$$t = \frac{P_T - P_{DF}}{g}$$

Figure 8 shows an example of active power ramp up control strategy, following a fault event, in accordance with some embodiments.

The graph shows that, during a fault event at time instant 12.9 s in which a voltage 2 of an electric grid drops from about 1.00 p.u. to 0.70 p.u., the active power 4 of the retained voltage 2 also drops by a similar factor owing to the maintenance of the active current 8 between 0.9 and 1.0 p.u., which are similar active current values before the fault occurred.

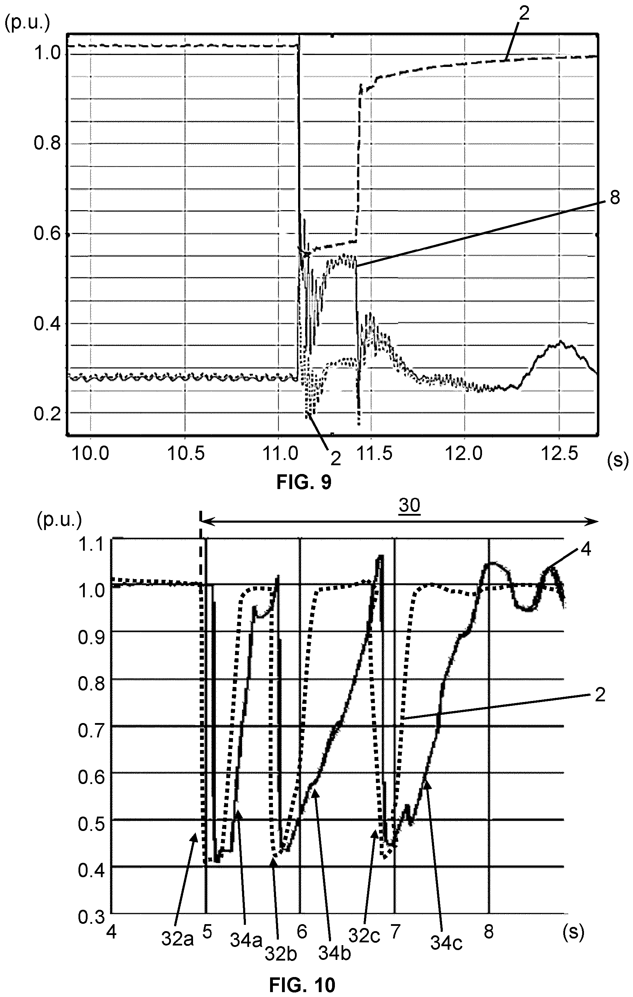

Figure 9 shows an example of an FRT control strategy and an active power ramp up control strategy, following a fault event, in accordance with some embodiments.

The graph shows that prior to a fault event at time instant 11.1 s, at least one WTG is providing active power according to a rated value of about 0.3 p.u.

When the fault takes place, voltage 2 drops from 1.0 p.u. to about 0.55 p.u., before recovering starting at time instant 11.4 s. During the fault, the active power 4 is kept substantially steady and without reducing its value owing to an increase in active current 8 when the fault takes place and at least until the voltage 2 starts to increase. The compensation of the voltage drop with the active current is applied to the WTG as an FRT control strategy.

After the fault clears, an active power ramp up control strategy is run in which, for the most part, the active current 8 is controlled so that it reduces as the voltage 2 increases, thereby keeping the active power 4 steady and at values similar to those before the fault occurred.

Figure 10 shows an example of an active power ramp up control strategy 30a, 30b, 30c, in presence of multiple faults 32a, 32b, 32c of a fault event, in accordance with some embodiments.

The graph shows that, during a fault event at time instant 5 s in which a voltage 2 of an electric grid drops from about 1.0 p.u. to 0.4 p.u., the active power 4 provided by at least one WTG also drops due to such first fault 32a and gets to a level based on the retained voltage 2. As the first fault 32a starts, a fault event is determined to exist and a predetermined time duration 30 of the fault event is started to monitor possible subsequent faults. Upon clearance of the first fault 32a after the voltage 2 has increased to levels substantially similar to those prior to the start of the fault event, a ramp up control strategy 34a causes the increase of the active power provided by one or more WTGs at a first rate to reach a target active power.

During the same fault event, as it can be observed from the predetermined time duration 30, a second fault 32b occurs causing a new voltage 2 drop. The active power 4 provided drops before increasing once again as the second fault 32b is cleared. However, the power 4 increase is according to the ramp up control strategy 34b with a second rate, which is lower than the first rate. That is to say, as a multiple fault parameter is at least indicative of existence of two faults 32a, 32b, the ramp up control strategy 34b is modified to the second rate, thereby making the increase of active power 4 slower than upon recovery from the first fault 32a.

A third fault 32c takes place afterwards, still within the same fault event, causing a new drop of voltage 2 and, thus, active power 4. The ramp up control strategy 34c for increasing the active power 4 after clearance of the third fault 32c may have, for example, the same second rate, or a third rate, such as a rate slower than the second rate.

Each fault 32a, 32b, 32c may be determined to exist when the voltage drop causes a voltage difference between the voltage 2 prior to a fault and the voltage 2 during the fault is greater than a configurable threshold, or the voltage 2 gets below a configurable threshold, or if an active power or an electrical power behave in the same manner, e.g., the active power or a difference thereof fulfills a certain condition based on a configurable threshold, or the electrical torque or a difference thereof fulfills a certain condition based on a configurable threshold.

In this text, the term "includes", "comprises" and derivations thereof (such as "including", "comprising", etc.) should not be understood in an excluding sense, that is, these terms should not be interpreted as excluding the possibility that what is described and defined may include further elements, steps, etc.

On the other hand, the disclosure is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method comprising:

   monitoring active power provided by at least one wind turbine generator, WTG, prior to a fault event that causes at least one fault affecting the at least one WTG in a predetermined time duration, each fault of the at least one fault causing a voltage reduction;
   determining a voltage reduction parameter indicative of the voltage reduction of at least one fault in the fault event when the fault event occurs; and
   determining an active power ramp up control strategy for the at least one WTG at least based on the active power and the voltage reduction parameter.

2. The method of claim 1, further comprising determining a multiple fault parameter indicative of existence of multiple faults in the fault event; wherein the determination of the active power ramp up control strategy is further based on the multiple fault parameter.

3. The method of claim 2, wherein, in the determination of the active power ramp up control strategy, the active power ramp up control strategy is made slower when: the multiple fault parameter is indicative of existence of multiple faults, and/or the multiple fault parameter is indicative of an increase in number of faults.

4. The method of any one of claims 2-3, wherein the multiple fault parameter comprises at least one of: a number of faults during the predetermined time duration of the fault event, a time elapsed between at least one pair of faults during the predetermined time duration of the fault event, and the voltage reduction parameter for a plurality of faults during the predetermined time duration of the fault event.

5. The method of any one of the preceding claims, further comprising making the predetermined time duration longer when a second fault and/or at least one subsequent fault occurs in the fault event, the second fault and/or the at least one subsequent fault being posterior to the first fault.

6. The method of any one of the preceding claims, wherein determining the active power ramp up strategy comprises determining an active power ramp up rate from a predetermined range of active power rates or selecting the active power ramp up rate from a plurality of predetermined active power ramp up rates.

7. The method of any one of the preceding claims, further comprising monitoring at least one parameter representative of a state of at least one component of the at least one WTG; wherein the determination of the active power ramp up control strategy is further based on the monitored at least one parameter.

8. The method of claim 7, wherein the at least one parameter comprises a drivetrain swing phase of the at least one WTG; and, in the determination of the active power ramp up control strategy, the active power ramp up control strategy has a time duration that is proportional to measured swinging in the monitored drivetrain swing phase.

9. The method of any one of the preceding claims, further comprising running a fault ride through control strategy during the occurrence of the fault event by increasing an active current on the at least one WTG to minimize reduction in active power provided by the at least one WTG when the monitored active power corresponds to a rated active power below a nominal active power.

10. The method of claim 9, wherein the determination of the active power ramp up control strategy is further based on the fault ride through control strategy.

11. The method of any one of the preceding claims, further comprising running the active power ramp up control strategy after a predetermined time has elapsed since the fault event started.

12. The method of any one of the preceding claims, wherein the voltage reduction parameter comprises at least one of: an active power difference between the active power prior to the fault event and the active power provided by the at least one WTG during the fault event, an amount of active power that may be supplied to an electric grid during the fault event, an amount of retained voltage on the at least one WTG, and an electrical torque difference between an electrical torque of the at least one WTG prior to the fault event and the electrical torque of the at least one WTG during the fault event.

13. A computing device or system comprising means adapted to execute the steps of a method according to any one of the preceding claims.

14. A wind turbine generator, WTG, or a wind farm comprising at least one computing device or system of claim 13 configured to control operation of one or more WTGs; wherein the wind farm comprises a plurality of WTGs.

15. A computer program including instructions which, when the program is executed by at least one computing device or system, cause the at least one computing device or system to carry out a method according to any one of claims 1-12.

FIG. 1

FIG. 2

FIG. 3

FIG. 4

FIG. 5

U / U_N
(p.u.)

2

1

$K_E*U_B$

$K_S*U_B$

$U_R$

0

(s)

P / P_N
(p.u.)

$P_{NC}$

4'  4

$K_T*P_{NC}$

$P_S$

0

$t_F$        $t_S$        $t_E$        (s)

**FIG. 6**

**FIG. 7**

**FIG. 8**

**FIG. 9**

**FIG. 10**

**EUROPEAN SEARCH REPORT**

Application Number

EP 24 20 4791

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 106 451 543 A (UNIV TSINGHUA ET AL.) 22 February 2017 (2017-02-22) | 1-7,9-15 | INV. F03D7/02 |
| Y | * the whole document * | 8 | |
| Y | US 2022/170444 A1 (KAVIL KAMBRATH JISHNU [IN] ET AL) 2 June 2022 (2022-06-02) * the whole document * | 8 | |
| A | US 2013/015660 A1 (HESSELBAEK BO [DK] ET AL) 17 January 2013 (2013-01-17) * the whole document * | 1-15 | |

TECHNICAL FIELDS SEARCHED (IPC)

F03D

The present search report has been drawn up for all claims

| Place of search | Date of completion of the search | Examiner |
|---|---|---|
| The Hague | 28 February 2025 | Libeaut, Laurent |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 722 529 A1**

## ANNEX TO THE EUROPEAN SEARCH REPORT
## ON EUROPEAN PATENT APPLICATION NO.

EP 24 20 4791

This annex lists the patent family members relating to the patent documents cited in the above-mentioned European search report.
The members are as contained in the European Patent Office EDP file on
The European Patent Office is in no way liable for these particulars which are merely given for the purpose of information.

28-02-2025

| Patent document cited in search report | | Publication date | Patent family member(s) | | Publication date |
|---|---|---|---|---|---|
| CN 106451543 | A | 22-02-2017 | NONE | | |
| US 2022170444 | A1 | 02-06-2022 | CN | 114593014 A | 07-06-2022 |
| | | | EP | 4008897 A1 | 08-06-2022 |
| | | | US | 2022170444 A1 | 02-06-2022 |
| US 2013015660 | A1 | 17-01-2013 | EP | 2494671 A2 | 05-09-2012 |
| | | | US | 2013015660 A1 | 17-01-2013 |
| | | | WO | 2011050807 A2 | 05-05-2011 |

EPO FORM P0459

For more details about this annex : see Official Journal of the European Patent Office, No. 12/82

17